**Europäisches Patentamt**

**European Patent Office**

**Office européen des brevets**

(11) Veröffentlichungsnummer: **0 197 380**
**B1**

(12) **EUROPÄISCHE PATENTSCHRIFT**

(45) Veröffentlichungstag der Patentschrift: **27.12.90**

(21) Anmeldenummer: **86103722.4**

(22) Anmeldetag: **19.03.86**

(51) Int. Cl.⁵: **A 63 B 45/00**

(54) Verfahren zur Belegung von Tennisbällen.

(30) Priorität: **01.04.85 DE 3511882**

(43) Veröffentlichungstag der Anmeldung:
**15.10.86 Patentblatt 86/42**

(45) Bekanntmachung des Hinweises auf die
Patenterteilung:
**27.12.90 Patentblatt 90/52**

(84) Benannte Vertragsstaaten:
**FR GB IT SE**

(56) Entgegenhaltungen:
**DE-A-2 526 595**
**DE-A-3 228 341**
**GB-A-1 373 005**
**US-A-4 241 118**

(73) Patentinhaber: **Siebertz, Stefan**
**Zum Altenforst 5**
**D-5210 Troisdorf (DE)**

(72) Erfinder: **Siebertz, Stefan**
**Zum Altenforst 5**
**D-5210 Troisdorf (DE)**

(74) Vertreter: **Eyer, Eckhardt Philipp, Dipl.-Ing.**
**Patentanwälte Eyer & Linser Robert-Bosch-**
**Strasse 12a**
**D-6072 Dreieich (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**Beschreibung**

Die Erfindung betrifft ein Verfahren zum Belegen von Spielbällen, insbesondere Tennisbällen, bei dem auf einen baleimten Ballkern zwei im wesentlichen hantelförmige Deckteile in einem Winkel von 90° ineinandergreifend nacheinander durch Rollen über die ausgelegten hantelförmigen Deckteile aufgebracht werden, wobei die zu einem Stapel verbundenen Deckteile mittels eines Magazines dem Rohball derart zugeführt werden, daß die beleimten Ballkerne nacheinander zunächst mittels einer ersten Andruckeinrichtung derart in Längsrichtung über den Stapel gerollt werden, daß der Ballkern beginnend mit der Berührung des zuoberst liegenden Deckteiles eine der Deckteillänge zuzüglich der Hälfte des Zwischenspaltes entsprechenden Weg zurücklegt und am Ende dieses Weges mittels einer zweiten Andruckeinrichtung über eine etwa einem 3/4 Ballumfang entsprechende, sich quer zur ersten Andruckbahn erstreckende Blindstrecke und danach über einen weiteren Deckteilestapel gerollt wird derart, daß die Kante des zweiten Deckteils mit Ziernahtabstand in die Bucht des bereits aufgebrachten Deckteiles eingreift.

Bei diesem aus der DE—A—3 228 341 bekanntgewordenen Verfahren dieser Art erfolgt die Belegung des Rohballes derart, daß er mittels zweier in gleichem Drehsinne umlaufenden Bändern über zwei Deckteilmagazine gefördert wird, wobei am Ende des ersten Andruckbandes ein Zwischenband vorgesehen ist, mit dessen Hilfe der mit einem Deckteil versehene Ball dem anderen Andruckband übergeben wird. Das bekannte Verfahren hat sich im Wesentlichen gut bewährt, die Genauigkeit der Ballführung und damit die Präzision der Bedeckung des Balles werden jedoch als ungenügend betrachtet.

Der vorliegenden Erfindung leigt als Aufgabe die Schaffung eines Verfahrens zur Belegung von Spielbällen, insbesondere Tennisbällen zugrunde, mit dessen Hilfe bei beschleunigtem Durchsatz und damit verbesserter Wirtschaftlichkeit eine höhere Genauigkeit der Bedeckung, d.h. gleichmäßigerer Nahtabstand zwischen den Deckteilen erzielt werden kann. Die Erfindung besteht darin, daß die Andruckeinrichtungen von zwei in unterschiedlichen Ebenen umlaufenden und sich in einem Winkel von 90° kreuzenden Bändern gebildet sind, die mit einander gegenläufiger Förderrichtung umlaufen und im Kreuzungspunkt einen dem Durchmesser des Rohballes entsprechenden Abstand aufweisen, wobei die Deckteile von dem einen Magazin von unten und von dem anderen Magazin von oben in Berührung mit dem Rohball gebracht werden und die Bänder mittels einer von den durchlaufenden Bällen ausgelösten Lichtschrankensteuerung derart angetrieben werden, daß bei der Übergabe des Balles von dem zulaufenden Band auf das ablaufende Band zunächst das ablaufende Band und danach bei kurzzeitigem gleichzeitigem Halt beider Bander das zulaufende Band angehalten werden.

Durch die Erfindung ist ein Verfahren geschaffen, mit dessen Hilfe bei beschleunigtem Durchsatz und damit verbesserter Wirtschaftlichkeit eine höhere Genauigkeit der Bedeckung, d.h. ein gleichmäßigerer Nahtabstand zwischen den Deckteilen erzielt werden kann, dadurch, daß einerseits eine als Ursache für Belegungsungenauigkeiten anzusehende Übergabestelle von einem Band zum anderen entfällt und andererseits die Bewegung sowohl in der auf den Kreuzungspunkt zulaufenden als auch in der von dem Kreuzungspunkt ablaufenden Richtung—wegen des sich zeitlich teilweise überlappenden aufeinanderfolgenden Abstoppens der Bänder—auch im Übergabebereich absolut winkelrecht linear und ohne jegliche Querkraft bzw. Querbewegung erfolgt.

Die Erfindung ist in der Zeichnung an beispielsweise Tennisbällen veranschaulicht. Es zeigen

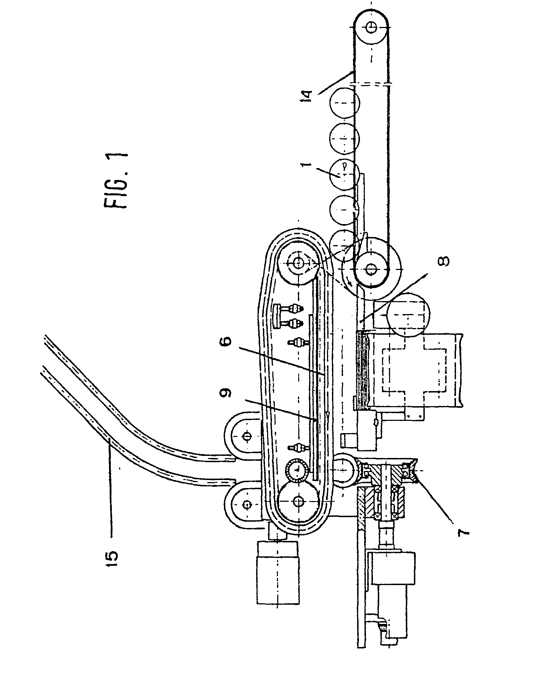

Fig. 1 eine Sicht von der Seite auf eine Vorrichtung zur Belegung von Tennisbällen nach dem Verfahren gemäß Erfindung

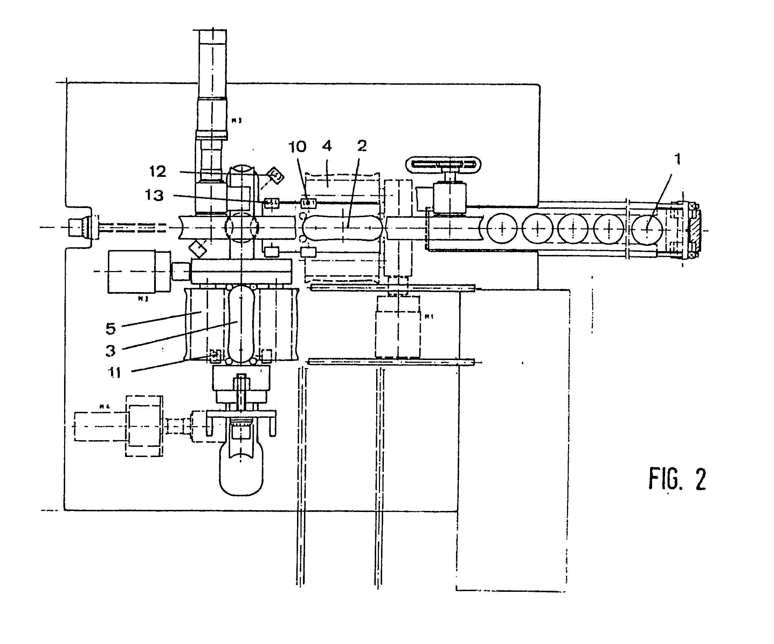

Fig. 2 eine Sicht von oben auf Fig. 1.

Die in der Zeichnung dargestellte Vorrichtung dient dem Belegen von Tennisbällen derart, daß auf einen beleimten Ballkern 1 zwei im wesentlichen hantelförmige Deckteile 2, 3 in einem Winkel von 90° ineinandergreifend nacheinander durch Rollen über die ausgelegten hantelförmigen Deckteile aufgrebracht werden, wobei die zu einem Stapel verbundenen Deckteile in einem Magazin 4, 5 gestapelt sind und die Ballkerne 1 nacheinander zunächst mittels einer ersten Andruckeinrichtung 6 derart in Längsrichtung über das Magazin 4 gerollt werden, daß der Ballkern 1 beginnend mit der Berührung des zuoberst liegenden Deckteiles 2 eine der Deckteillänge zuzüglich der Hälfte des Zwischenspaltes entsprechenden Weg zurücklegt und am Ende dieses Weges mittels der zweiten Andruckeinrichtung 7 über eine etwa einem 3/4 Ballumfang entsprechende, sich quer zur ersten Andruckbahn erstreckende Blindstrecke und danach über ein weiteres Deckteilemagazin 5 gerollt wird. Die Andruckeinrichtungen 6, 7 sind von zwei in unterschiedlichen Ebenen umlaufenden, sich in einem Winkel von 90° kreuzenden—und mit jeweils einer Arbeitsplatte 8, 9 zusammenwirkenden Bändern gebildet, die in einander gegenläufiger Förderrichtung umlaufen und im Kreuzungsbereich einen dem Rohballdurchmesser entsprechenden Abstand aufweisen, wobei die Deckteile 2, 3 von dem einen Magazin 4 von unten und von dem anderen Magazin 5 von oben in Berührung mit dem Rohball gebracht werden und die Bänder 6, 7 mittels einer von den durchlaufenden Bällen 1 ausgelösten Lichtschrankensteuerung 12, 13 derart angetrieben werden, daß bei der Übergabe des Balles von dem zulaufenden Band auf das ablaufende Band zunächst das ablaufende Band 7 und danach bei kurzzeitigem gleichzeitigem Halt beider Bänder 6, 7 das zulaufende Band 6 angehalten werden.

Das erfindungsgemäße Verfahren verläuft wie folgt:

Die beleimten Rohbälle 1 werden mittels des eine Vereinzelung der Bälle gewährleistenden Transportbandes 14 der Einrichtung zugeführt und durch das Andruckband 6 über das oberste Deckteil 2 des im Magazin 4 zusammengefaßten Deckteilstapels geführt. Das eine der Deckteile ist damit aufgebracht. Durch Passieren der Lichtschranke 10 wird die Hubeinrichtung des Magazins 4 angesteuert und für das Anheben um eine Deckteilstärke gesorgt derart, daß das oberste Deckteil wieder in der Ebene des Arbeitstisches 8 liegt. Durch Passieren der Lichtschranke 13 wird das Andruckband 7 angehalten und der halbbedeckte Rohball bis in den Kreuzungsbereich befördert, in dem er zwischen den Andruckbändern 6 und 7 gehalten ist. Der Transport erfolgt bis zum Passieren der Lichtschranke 12, durch die in einem vorgegebenen kurzen zeitlichen Abstand das Andruckband 6 gestoppt sowie anschließend nacheinander das Andruckband 7 und dann das Andruckband 6 wieder in Bewegung versetzt werden. Die Übergabe des Balles erfolgt somit unter Stillstand beider Bänder, wobei während der Übergangsphase jeweils lediglich eines der beiden Bänder in Betrieb ist. Die Lichtschranke 11 dient der Auslösung der Fördereinrichtung für das Magazin 5, das von oben über die Zuführungseinrichtung 15 zugeführt wird.

## Patentanspruch

Verfahren zum Belegen von Spielbällen (1), insbesondere Tennisbällen, bei dem auf einen beleimten Ballkern zwei im wesentlichen hantelförmige Deckteile in einem Winkel von 90° ineinandergreifend nacheinander durch Rollen über die ausgelegten hantelförmigen Deckteile (2, 2) aufgebracht werden, wobei die zu einem Stapel verbundenen Deckteile mittels eines Magazines (4, 5) dem Rohball derart zugeführt werden, daß die beleimten Ballkerne nacheinander zunächst mittels einer ersten Andruckeinrichtung (6) derart in Längsrichtung über den Stapel gerollt werden, daß der Ballkern beginnend mit der Berührung des zuoberst liegenden Deckteiles (2) eine der Deckteillänge zuzüglich der Hälfte des Zwischenspaltes entsprechenden Weg zurücklegt und am Ende dieses Weges mittels einer zweiten Andruckeinrichtung (7) über eine etwa einem 3/4 Ballumfang entsprechende, sich quer zur ersten Andruckbahn erstreckende Blindstrecke und danach über einen weiteren Deckteilestapel gerollt wird derart, daß die Kante des zweiten Deckteiles (3) mit Ziernahtabstand in die Bucht des bereits aufgebrachten Deckteiles (2) eingreift, dadurch gekennzeichnet, daß die Andruckeinrichtungen von zwei in unterschiedlichen Ebenen umlaufenden und sich in einem Winkel von 90° kreuzenden Bändern (6, 7) gebildet sind, die mit einander gegenläufiger Förderrichtung umlaufen und im Kreuzungspunkt einen dem Durchmesser des Rohballes (1) entsprechenden Abstand aufweisen, wobei die Deckteile (2, 3) von dem einen Magazin (4) von unten und von dem anderen Magazin (5) von oben in Berührung mit dem Rohball gebracht werden und die Bänder (6, 7) mittels einer von den durchlaufenden Bällen ausgelösten Lichtschrankensteuerung (12, 13) derart angetrieben werden, daß bei der Übergabe des Balles (1) von dem zulaufenden Band (6) auf das ablaufende Band (7) zunächst das ablaufende Band (7) und danach bei kurzzeitigem gleichzeitigem Halt beider Bänder das zulaufende Band (6) angehalten werden.

## Revendication

Procédé de recouvrage de balles de jeu (1), en particulier de balles de tennis, dans lequel deux pièces de recouvrement ayant essentiellement la forme d'une haltère sont posées successivement sur un noyau de balle encollé de sorte qu'elles s'emboîtent l'une dans l'autre sous un angle de 90°, par roulement du noyau sur les pièces de recouvrement en forme d'haltère étalées, les pièces de recouvrement réunies en une pile étant amenées à la balle brute au moyen d'un magasin (4, 5) de telle manière que les noyaux de balle encollés soient successivement roulés tout d'abord au moyen d'un premier dispositif d'application sous pression (6) en direction longitudinale sur la pile de sorte que le noyau de balle parcoure, à partir de son entrée en contact avec la pièce de recouvrement (2) située le plus haut, un trajet correspondant à la longueur d'une pièce de recouvrement plus la moitié de la fente intermédiaire et qu'à la fin de ce trajet, il soit roulé, au moyen d'un second dispositif d'application sous pression (7), sur une distance à blanc correspondant à peu près aux 3/4 de la circonférence d'une balle et s'étendant perpendiculairement à la première piste d'application sous pression, puis sur une autre pile de pièces de recouvrement, de façon à ce que le bord de la seconde pièce de recouvrement (3) s'engage dans le creux de la pièce de recouvrement déjà posée (2) en ménageant l'intervalle de la couture ornementale, caractérisé en ce que les dispositifs d'application sous pression sont constitués par deux bandes (6, 7) qui circulent dans des plans différents et se croisent sous un angle de 90°, bandes qui tournent dans des directions de transport mutuellement opposées et sont separées, au point de croisement, par une distance correspondant au diamètre de la balle brute (1), les pièces de recouvrement (2, 3) étant mises en contact avec la balle brute de bas en haut par l'un des magasins (4) et de haut en bas par l'autre magasin (5), et les bandes (6, 7) étant entraînées, au moyen d'une commande à barrage photoélectrique (12, 13) déclenchée par le passage des balles, de telle manière que lors du transfert de la balle (1) de la bande d'arrivée (6) à la bande de départ (7), la bande de départ (7) soit tout d'abord arrêté, puis, après un bref arrêt simultané des deux bandes, la bande d'arrivée (6) soit arrêtée.

## Claim

Method of covering balls for games (1), more especially tennis balls, wherein two substantially dumbbell-shaped cover members are applied one after the other to a glued ball core as a result of its being rolled over the exposed dumbbell-shaped cover members (2, 3) so that they engage in one another at an angle of 90°, wherein the cover members, which are joined to form a stack, are supplied to the untreated ball by means of a magazine (4, 5) in such a manner that the glued ball cores are rolled over the stack in the longitudinal direction in succession initially by means of a first pressing device (6) in such a manner that the ball core, commencing with contact with the uppermost cover member (2), covers a distance which corresponds to the length of the cover members plus half the gap therebetween, and is rolled at the end of this distance by means of a second pressing device (7) over a blind path, which corresponds substantially to 3/4 of the ball circumference and extends transversely relative to the first pressure path, and then over an additional stack of cover members in such a manner that the edge of the second cover member (3) engages in the recessed portion of the already applied cover member (2), thereby leaving a spacing which forms a decorative seam, characterised in that the pressing devices are formed by two belts (6, 7), which rotate in different planes and intersect one another at an angle of 90°, such belts rotating in opposite conveying directions and having, at the point of intersection, a spacing corresponding to the diameter of the untreated ball (1), wherein the cover members (2, 3) are brought into contact with the untreated ball from below by one magazine (4) and from above by the other magazine (5), and the belts (6, 7) are driven by means of a light barrier control unit (12, 13), which is actuated by the traversing balls, in such a manner that, upon the ball (1) passing from the feeding belt (6) to the discharging belt (7), initially the discharging belt (7) is stopped and then the feeding belt (6) is stopped with a brief, simultaneous stoppage of both belts.

FIG. 1

FIG. 2